# EUROPEAN PATENT APPLICATION

(11) **EP 4 524 063 A1**
(43) Date of publication of application: **19.03.2025**
(21) Application number: 24200189.9
(22) Date of filing: 13.09.2024
(51) Int. Cl.: B65G 1/04, B65G 1/14, B65G 1/16, B65G 49/06

(54) **DEVICE AND METHOD FOR STORING NATURAL STONE SLABS**

(30) Priority: 15.09.2023 BE 202305756
(71) Applicant: Dovy Keukens nv, 8800 Roeselare (BE)
(72) Inventor: MUYLLE, Donald, 8800 Roeselare (BE)
(74) Representative: Brantsandpatents bv

(57) **Abstract**

The present invention relates to a device for storing natural stone slabs, comprising multiple slab carts, wherein the device comprises multiple pairs of parallel storage rails, wherein the storage rails extend in a transverse direction, wherein the pairs of storage rails are placed next to each other in a longitudinal direction and at the same distance from the same line according to the longitudinal direction, wherein the slab carts are movable on the pairs of storage rails, wherein the device comprises a pair of parallel transport rails and a transport robot, wherein the transport rails extend alongside the pairs of storage rails in the longitudinal direction, wherein the transport robot is movable on the transport rails, wherein the transport robot comprises a pair of parallel transfer rails, wherein the pair of transfer rails extends in the transverse direction, wherein the slab carts are movable on the transfer rails and wherein the transport robot includes a moving means for moving a slab cart between the transfer rails and a pair of storage rails. The invention also relates to a method and a use.

## Description

### TECHNICAL FIELD

The invention relates to a device for storing natural stone slabs, more specifically for automated storage of natural stone slabs on slab carts. The invention also relates to a method for storing natural stone slabs and to a use of the device and/or the method for displaying natural stone slabs for kitchen countertops to customers.

### PRIOR ART

Natural stone slabs are used in many applications. The natural stone slabs are, for example, cut into tiles or processed into kitchen countertops. There are very many different types of natural stone slabs, such as granite, Belgian blue stone, marble, etc. A company that processes natural stone slabs is therefore obliged to keep many different types in stock.

Traditionally, natural stone slabs are placed on slab carts or glass racks and stored closely together in a storage facility. Usually, natural stone slabs have dimensions between 1 m x 2 m and 2 m x 3 m and are very heavy. Multiple natural stone slabs of the same type can be placed on the same slab cart or glass rack. Practically, this means that the slab cart or glass rack can only be moved with the help of a heavy forklift truck. As a result, many movements with forklifts are necessary in the storage facility, which entails risks.

Natural stone slabs have a natural pattern. This pattern is unique for each natural stone slab. Even if slabs are of the same kind, the patterns can differ considerably from each other. This is disadvantageous for certain applications, for instance in the case of kitchen countertops where customers traditionally choose a specific type of natural stone for their countertop based on photos in a catalog. Customers can be disappointed at the final installation of the kitchen countertop if the pattern diverges too much from the photos. Also, when using a sample, there can be significant deviations because a sample cannot be cut from every natural stone slab. Selecting a natural stone slab in the storage facility is impossible because this involves too many forklift operations and the storage facility is too dangerous for a customer.

The present invention aims to at least find a solution to some of the above-mentioned problems or disadvantages.

### SUMMARY OF THE INVENTION

In a first aspect, the present invention relates to a device according to claim 1.

The device is particularly advantageous because all movements of the natural stone slabs in a storage facility can proceed in a fully automated manner with the help of a transport robot. There is no need to drive around the storage facility with a forklift. There doesn't even need to be any personnel in the storage facility during normal operation. An additional advantage is that the slab carts with natural stone slabs are always placed on pairs of parallel storage rails or transfer rails. As a result, the slab carts are always in the same position and are not tilted as when lifting with a forklift truck, so there is no risk of the natural stone slabs falling off the slab carts due to tilting. The storage of natural stone slabs is virtually risk-free due to the device. It is now safe for customers to enter the storage facility. Slab carts with natural stone slabs can be brought to an edge of the storage facility by the transport robot, allowing customers to view a pattern in the natural stone slabs and select the natural stone slab that will be used for their kitchen countertop, for instance, thus guaranteeing the customer will get the pattern in the final kitchen countertop that was chosen. The customer does not have to get between the slab carts for this. By using a transport robot, the slab carts with the desired natural stone slabs to be viewed can be automatically entered into a list of movements to be performed, without disturbing a normal process of processing natural stone slabs.

Preferred embodiments of the device are set out in claims 2 to 10.

A particular preferred embodiment of the invention relates to a device according to claim 2.

This preferred form is particularly advantageous because the placement of the wheels of the slab carts between lying arms of the C-shaped or I-shaped profiles prevents a slab cart from tipping over. Even if a slab cart is loaded too heavily or is bumped during loading or unloading, the slab cart cannot topple over. The device will at most block, but no unsafe situation will arise.

In a second aspect, the present invention relates to a method according to claim 11.

This method has the advantage, among other things, that all movements in a storage facility for slab carts with natural stone slabs can be fully automated using a transport robot. There are no forklifts needed in the storage facility itself, which means there is no risk of accidents with these forklifts. During normal operation, there is no need for any persons to enter the storage facility. An additional advantage is that all movements occur on pairs of rails, ensuring that slab carts always remain in the same position and are not tilted. The risk of natural stone slabs falling due to the tilting of slab carts has therefore been eliminated. This method is particularly advantageous because it makes the storage facility sufficiently safe to bring customers to the storage facility. By placing slab carts at the edge of the storage facility, a customer can view patterns in the natural stone slabs and select the natural stone slab for, for example, their kitchen countertop.

Preferred embodiments of the method are described in dependent claims 12-14.

In a third aspect, the present invention relates to a use according to claim 15.

This use results in an improved selection of natural stone slabs for a kitchen countertop. Through the use of the device and/or the method, natural stone countertops can be safely shown to customers, allowing them to select a specific natural stone slab with a desired pattern. As a result, in a finished kitchen countertop, the pattern will not differ from what was chosen.

### DESCRIPTION OF THE FIGURES

**Figure 1** shows a front view of a device for storing natural stone slabs according to an embodiment of the present invention.
**Figure 2** shows a rear view of the device from Figure 1.
**Figure 3** shows a left side view of the device from Figure 1.
**Figure 4** shows a right side view of the device from Figure 1.
**Figure 5** shows a top view of the device in Figure 1.
**Figure 6** shows a bottom view of the device from Figure 1.
**Figure 7** shows a perspective view of a detail on the bottom of the device from Figure 1.
**Figure 8** shows a detail at the bottom of a slab cart of the device from Figure 1.
**Figure 9** shows a locking mechanism of the device from Figure 1.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise," "comprising," "consist of," "consisting of," "provided with," "include," "including," "contain," "containing," are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

In a first aspect, the invention relates to a device for storing natural stone slabs. The device comprises multiple slab carts. A slab cart comprises four wheels for moving the slab cart. The slab cart comprises a first support surface and a second support surface for supporting a natural stone slab. The first support surface and the second support surface preferably form an L, wherein a short leg of the L is the first support surface and a long leg of the L is the second support surface. There is an angle between 0° and 30° between the first support surface and a horizontal plane. There is an angle between 60° and 88° between the second support surface and the horizontal plane. This means that the long leg of the L is a standing leg that is tilted at a small angle relative to the horizontal plane, and that the short leg of the L is a lying leg, which is preferably also tilted at a small angle relative to the horizontal plane. This is advantageous because more natural stone slabs can be stored upright in a storage facility on a limited floor area, while the slight tilting of the second support surface ensures that the natural stone slabs do not topple over.

According to a preferred embodiment, the device comprises multiple pairs of parallel storage rails. The pairs of storage rails extend in a transverse direction. The pairs of storage rails are placed next to each other in a longitudinal direction. The longitudinal direction is transverse to the transverse direction. The pairs of storage rails are placed at the same distance from the same line in the longitudinal direction next to each other. The distance is measured in the transverse direction from the mentioned line to a nearest point of each pair of storage rails. The pairs of storage rails thus form a row of parallel storage rails in the longitudinal direction. The storage rails of the pairs of storage rails preferably have an equal cross-section and an equal length. The storage rails are preferably metal rails.

A pair of storage rails is suitable for storing a slab cart. The slab carts are movable on the pairs of storage rails. The slab carts extend in the transverse direction on the pairs of storage rails. The wheels of the slab carts are suitable for rolling on or in the pairs of storage rails. Preferably, the wheels include a flange for guiding the wheels along the storage rails. The wheels are preferably attached to ends of an axle. This means that a slab cart comprises two axles, each with two wheels. Preferably, a pair of storage rails has a length in the transverse direction that is at least as great as a length of the slab carts in the transverse direction. This way, a slab cart does not protrude beyond a pair of storage rails when storing the slab cart on the pair of storage rails.

The device further comprises a pair of parallel transport rails and a transport robot. The transport rails are preferably metal rails. The transport rails extend in the longitudinal direction alongside the pairs of storage rails. A transport rail can be considered as the line along which the pairs of storage rails are placed next to each other at the same distance according to the longitudinal direction. The transport rails preferably extend along the full previously described row of parallel storage rails in the longitudinal direction.

The transport robot is movable on the transport rails by motorized means. The transport robot comprises a first motor for moving the transport robot on the transport rails. Preferably, the first motor is an electric motor. The transport robot comprises wheels for driving on the transport rails. Preferably, the wheels include a flange for guiding the wheels along the transport rails. The wheels are preferably attached to ends of an axle. This means that the transport robot comprises at least two axles, each with two wheels. At least one axis is driven by the first motor of the transport robot.

The transport robot comprises a pair of parallel transfer rails. The transfer rails are preferably metal rails. The pair of transfer rails extends in the transverse direction. The pair of transfer rails is suitable for temporarily storing a slab cart during the movement of the slab cart by moving the transport robot in the longitudinal direction. The slab carts are movable on the transfer rails. The slab carts extend in the transverse direction on the pair of transfer rails. The wheels of the slab carts are suitable for rolling on or in the pair of transfer rails. Preferably, the pair of transfer rails has a length in the transverse direction that is at least as large as a length of the slab carts in the transverse direction. As a result, a slab cart does not extend beyond the pair of transfer rails during temporary storage of the slab cart on the pair of transfer rails.

The transport robot comprises a moving means for moving a slab cart between the pair of transfer rails and a pair of storage rails. The transport means is for example a hydraulic or pneumatic cylinder suitable for pushing a slab cart from the pair of transfer rails to a pair of storage rails and for pulling a slab cart from a pair of storage rails to the pair of transfer rails. The cylinder comprises a piston that is movable in the transverse direction. The moving means is, for example, a transport chain or conveyor belt driven by a second motor with a coupling means suitable for pulling a slab cart from the pair of transfer rails to a pair of storage rails and from a pair of storage rails to the pair of transfer rails. The coupling means is suitable for coupling with a slab cart. The coupling means is preferably an automatic coupling that can be both automatically coupled to and uncoupled from a slab cart. It will be apparent that other suitable transport means are also possible.

The device is particularly advantageous because all movements of the natural stone slabs in a storage facility can proceed in a fully automated manner with the help of a transport robot. There is no need to drive around the storage facility with a forklift.

There doesn't even need to be any personnel in the storage facility during normal operation. An additional advantage is that the slab carts with natural stone slabs are always placed on pairs of parallel storage rails or transfer rails. As a result, the slab carts are always in the same position and are not tilted as when lifting with a forklift truck, so there is no risk of the natural stone slabs falling off the slab carts due to tilting. The storage of natural stone slabs is virtually risk-free due to the device. It is now safe for customers to enter or approach the storage facility. Slab carts with natural stone slabs can be brought to an edge of the storage facility by the transport robot, allowing customers to view a pattern in the natural stone slabs and select the natural stone slab that will be used for their kitchen countertop, for instance, thus guaranteeing the customer will get the pattern in the final kitchen countertop that was chosen. The customer does not have to get between the slab carts for this. By using a transport robot, the slab carts with the desired natural stone slabs to be viewed can be automatically entered into a list of movements to be performed, without disturbing a normal process of processing natural stone slabs.

According to an embodiment, a security fence is placed around the device. The security fence closes off the device to people, so that no one can be hit by the transport robot. The device comprises means for detecting the presence of persons within the security fence. The means are connected to a control system of the transport robot. The control system is configured to stop the transport robot upon detection of persons within the security fence. These means are, for example, an access door with a contact for detecting the opening of the access door. If the access door is opened, the transport robot stops. Other possible means are a motion detector, a light curtain, etc. It is clear that several of these means can be combined.

According to a further embodiment, a zone is delineated within the security fence using a second security fence. The zone is separated from the rest of the device by the second security fence. At least one pair of storage rails is placed inside the zone, and at least one pair of storage rails is placed outside the zone. Preferably, multiple pairs of storage rails are placed within the zone. Preferably, the device comprises a number of pairs of storage rails outside the zone that is at least ten times greater than a number of pairs of storage rails inside the zone. Preferably, multiple pairs of storage rails are placed within the zone in the longitudinal direction with a greater spacing distance than outside the zone. The at least one pair of storage rails is preferably accessible to the transport robot through an opening in the second security fence and the transport rails are located outside the zone. As a result, the transport robot does not enter the zone. Preferably, the zone is accessible to persons from outside the remaining part of the device. The device comprises means for detecting the presence of persons within the zone. The means are connected to a control system of the transport robot. The control system is configured to prevent movements of slab carts by the transport robot in and out of the zone upon detection of persons within the zone. Preferably, the control system is configured to not obstruct movements of slab carts by the transport robot outside the zone when persons are detected within the zone. These means are, for example, an access door with a contact for detecting the opening of the access door. If the access door is opened, the control system prevents the transport robot from moving slab carts in and out of the zone. Other possible means are a motion detector, a light curtain, etc. It is clear that several of these means can be combined.

This embodiment is advantageous because the device is thus divided into two parts, where a part outside the zone is intended as storage and a part inside the zone as a space where customers can view and select natural stone slabs. Because the zone is a separate part of the device, the presence of customers in the zone does not disrupt the normal operations in the business. Placing the pairs of storage rails further apart in the zone is advantageous because it gives customers a better view of the natural stone slabs. Transport rails located outside the zone are particularly advantageous because they mean that the transport robot never travels inside the zone.

According to an embodiment, the device comprises a loading station and an unloading station. Optionally, the loading station and the unloading station are combined into a single station. Preferably, the loading station and the unloading station are decoupled. This is advantageous because as a result, for example, at a first end of the device, a delivery of natural stone slabs can be placed on loading carts in the loading station with the help of a hoisting device, while at another end of the device, a natural stone slab needed for processing can be taken from a slab cart in the unloading station with the help of a hoisting device. This allows deliveries and production processes to be carried out independently of each other. The loading station comprises at least one parallel pair of loading rails. The loading rails are preferably metal rails. The at least one pair of loading rails is as previously described for the pairs of storage rails. The at least one pair of loading rails is placed along the transport rails in the same way as the pairs of storage rails. Alternatively, the at least one pair of loading rails is placed at a greater distance from the pairs of transport rails than the pairs of storage rails, and the at least one pair of loading rails is connected to a pair of storage rails by means of transport means, such as for example conveyor belts or transport chains. The transport means are suitable for moving slab carts from the at least one pair of loading rails to the pair of storage rails. This embodiment is particularly advantageous in combination with previously described embodiments with a security fence, because receiving deliveries can now take place while the transport robot continues to move slab carts, for example to the unloading station or the zone as in a previously described embodiment. The description of the loading station applies mutatis mutandis to the unloading station.

It is clear that the device can comprise one or more loading stations and/or one or more unloading stations.

According to a preferred embodiment, the storage rails and the transfer rails are U-shaped or I-shaped profiles. The wheels of the slab carts are placed between arms of the U-shaped or I-shaped profiles.

In the case of U-shaped profiles, the upright legs of the Roman letter U are the arms between which the wheels of the slab carts are placed. Preferably, the U-shaped profiles of a pair of storage rails or transfer rails are oriented with an opening between the legs of the Roman letter U facing each other. This means that the standing legs of the Roman letter U form lying arms.

In the case of I-shaped profiles, lying arms at the top and bottom of the Roman letter I are the arms between which the wheels of the slab carts are placed. This means that the wheels of a slab cart are located on one side of an I-shaped profile. Preferably, the I-shaped profiles are placed upright. Preferably, two adjacent pairs of storage rails have a common I-shaped profile. Wheels of a first slab cart on a first of the two adjacent pairs of storage rails are placed on a first side of the common I-shaped profile between the lying arms of the common I-shaped profile and wheels of a second slab cart on a second of the two adjacent pairs of storage rails are placed on a second opposite side of the I-shaped profile between the lying arms of the common I-shaped profile.

This embodiment is particularly advantageous because the placement of the wheels of the slab carts between arms of the C-shaped or I-shaped profiles prevents a slab cart from tipping over. Even if a slab cart is loaded too heavily or is bumped during loading or unloading, the slab cart cannot topple over. The device will at most block, but no unsafe situation will arise.

It will be apparent to one skilled in the art that this embodiment is also applicable to the loading rails.

According to a preferred embodiment, each pair of storage rails comprises at a first end a stop and at a second opposite end a locking mechanism for closing off the pair of storage rails. The second end is directed toward the transport rails. The locking mechanism locks automatically. The locking mechanism preferably locks automatically without the use of a controlled or powered actuator. This allows the locking mechanism to also lock even if, for example, there is no electricity. The locking mechanism is, for example, a bolt that is biased to a locked position by a spring. The transport robot includes an unlocking mechanism for unlocking the locking mechanism. The unlocking mechanism is for example an actuator that grabs the bolt and holds it in an open position.

The stop is advantageous to prevent a slab cart from rolling at the first end of the pair of storage rails. The locking mechanism is advantageous to prevent a slab cart at the second end from rolling off the pair of storage rails in the absence of the transport robot.

According to a further embodiment, the locking mechanism is an unbalanced lever. The unbalanced lever is rotatable about an axis along the longitudinal direction. The lever is oriented in the transverse direction. The lever is heavier at a first end than at a second opposite end. The first end is directed towards the transport rails. Because the first end is heavier than the second end, the second end is higher than the first end in a resting state. The second end prevents passage for a slab cart on the pair of storage rails in the resting state. The first end rests in the resting state against a stop that prevents the unbalanced lever from rotating completely around the axis. Otherwise, the slab cart could push the second end past the axis and then down. The first end is rounded on a bottom side. The transport robot has a pressing element movable in the transverse direction for pressing against the rounded bottom of the first end of the lever. The pressing element can be moved in the transverse direction, for example, by means of a linear motor, a hydraulic piston, a pneumatic piston, or another suitable means. By pressing the pressing element against the rounded bottom of the first end, the first end moves up and consequently the second end moves down, such that the passage for the slab cart on the pair of storage rails is no longer obstructed and the storage robot can transfer the slab cart from the pair of storage rails to the pair of transfer rails.

This embodiment is advantageous because the unbalanced lever automatically locks without being controlled or any power source. This embodiment is also advantageous because the locking mechanism automatically opens when a slab cart is placed on the pair of storage rails by the transport robot. The slab cart pushes against the second end, which thereby moves downward and allows the slab cart to pass. The second end moves automatically upward after the slab cart has passed the locking mechanism.

According to a preferred embodiment, the moving means of the transport robot comprises a transport chain or a conveyor belt. The transport chain or the conveyor belt runs in the transverse direction in a loop around two standing shafts. A first standing shaft is located at a first end in the transverse direction of the moving means and a second standing shaft is located at a second opposite end. Wheels for guiding the transport chain or the conveyor belt are placed on the standing shafts. The wheels are rotatable. In the case of a transport chain, the wheels are preferably sprockets. The moving means comprises a second motor for moving the transport chain or the conveyor belt in a loop around the two standing shafts. The second motor drives one of the two standing shafts. The second motor is preferably an electric motor. Preferably, the second motor drives a third standing shaft with a drive wheel, wherein the third standing shaft is located according to the transverse direction between the first and the second standing shaft. The drive wheel is suitable for moving the transport chain or the conveyor belt in a loop around the two standing shafts. In the case of a transport chain, the drive wheel is preferably a sprocket wheel. Preferably, the transport means comprises a transport chain to avoid slippage when moving heavy slab carts in the transverse direction.

The transport chain or the conveyor belt comprises two standing and protruding pins. The slab carts comprise two cavities for simultaneously receiving the two pins. The two cavities are located along the same line in the transverse direction. An intermediate distance according to the transverse direction between the two cavities is thus equal to a distance along the transport chain between the two pins. The two cavities are located near two opposite ends of the slab carts. The cavities are preferably located less than 50 cm from one end of the slab cart, more preferably less than 40 cm, even more preferably less than 30 cm, even more preferably less than 20 cm, and most preferably less than 10 cm. A distance from a cavity to an end is measured from a center of the cavity. The cavities are on a bottom side of a slab cart. The cavities preferably include guide pieces for guiding the pins in and out of the cavities. Openings of the cavities are directed towards the transport chain or the conveyor belt. The pins preferably comprise rotatable guide rollers. This is advantageous for reduced friction during insertion of the pins into the cavities. The transport chain or the conveyor belt is movable according to the transverse direction. This means that the first standing shaft and the second standing shaft are movable in the transverse direction, wherein a distance between the first standing shaft and the second standing shaft preferably remains unchanged. Preferably, the transport robot comprises a frame to which the first standing shaft and the second standing shaft are attached. The frame is movable in the transverse direction. By moving the frame in the transverse direction, the transport chain or the conveyor belt is moved in the transverse direction. The transport robot includes a third motor for moving the moving means in the transverse direction. The third motor is preferably an electric motor. Preferably, the frame includes a rack. By moving the rack using a gear wheel coupled to the third motor, the frame can be moved along the transverse direction.

For moving a slab cart from the pair of storage rails to the pair of transfer rails of the transport robot, the transport chain or the conveyor belt outside the transport robot is brought partially beneath one end of a slab cart on the pair of storage rails by moving the moving means in the transverse direction to the pair of storage rails. The transport chain or the conveyor belt is located below a cavity near an end of the slab cart that is directed towards the transport robot. One of the standing shafts, which is closest to the mentioned end of the slab cart, is brought into the same position in the cavity according to the transverse direction. According to the longitudinal direction, there is indeed a distance between the mentioned standing shaft and the mentioned cavity. By moving the transport chain or the conveyor belt in a loop around the two standing shafts in the correct direction, a first of the two upright and protruding pins will be received in the mentioned cavity after making a turn around the mentioned standing shaft and then move in the transverse direction towards the transport robot. The slab cart is thereby pulled along. When the transport chain or the conveyor belt is moved far enough, a second pin of the two upright and protruding pins is also received in the cavity at an opposite end of the slab cart. The transport chain or conveyor belt continues to move in a loop around the two standing shafts until the slab cart is fully on the pair of transfer rails. When transferring the slab cart onto the pair of transfer rails, the moving means is also moved back to the transport robot in the transverse direction. It is clear that moving a slab cart from the pair of transfer rails to a pair of storage rails is done in a similar manner.

According to a preferred embodiment, the device comprises a barcode. The barcode extends longitudinally along the pairs of storage rails. The barcode is composed of a sequence of individual barcodes. The transport robot comprises a reader for reading the barcode. The barcode comprises an encoding of a position in the longitudinal direction. The barcode is, for example, applied to a floor surface on which the device is placed. For example, the barcode is placed in the longitudinal direction on a support beam on which the pairs of storage rails are placed. For example, the barcode is applied to a transport rail. The barcode is advantageous because it always allows a sufficiently accurate position of the transport robot to be determined, even if the wheels of the transport robot slip on the pair of transport rails. The barcode is an absolute reference. The barcode requires only a very short processing time on a processor in a control unit of the transport robot, allowing for a smooth and accurate movement of the transport robot.

It is clear that a sequence of QR codes has a similar effect.

According to a preferred embodiment, the device comprises at least one level. The at least one level is placed above the pairs of storage rails. Additional pairs of storage rails are placed on the at least one level. The additional pairs of storage rails are designed and positioned in a similar manner to the pairs of storage rails located below them. The moving means of the transport robot is movable in a height direction, transverse to the longitudinal direction and the transverse direction. The moving means can, for instance, be moved in the height direction using hydraulic or pneumatic pistons. The moving means, for example, are coupled with a fourth motor, preferably an electric motor, in the height direction by means of racks and gears.

This embodiment is advantageous because more slab carts can be stored on the same floor space. With the exception of the movement in the height direction, the slab carts are moved as described above.

According to a preferred embodiment, pairs of storage rails are placed on both sides of the transport robot in the transverse direction. The pairs of storage rails are placed on both sides in a similar manner as previously described. The moving means is movable along the transverse direction on both sides of the transport robot outside the transport robot. This allows the transport robot to place or remove slab carts on the pairs of storage rails on both sides. This embodiment is advantageous because in this way more pairs of storage rails can be reached by the same transport robot at the same distance in the longitudinal direction.

According to a preferred embodiment, the device comprises multiple transport robots. The multiple transport robots are as previously described. The pairs of storage rails delineate parallel aisles. In each of the parallel aisles, at least one transport robot is placed on parallel transport rails. Between each two adjacent aisles is a pair of parallel movement rails for moving a slab cart between aisles. The movement rails are preferably metal rails. The pair of movement rails includes transport means, such as for example conveyor belts or transport chains, for moving a slab cart from a first aisle to an adjacent second aisle.

This embodiment is advantageous if more storage space is required to limit a length of the device. It is also possible to share a loading station and/or an unloading station with multiple aisles.

In a second aspect, the invention relates to a method for storing natural stone slabs.

The method comprises the steps of:
- supplying a natural stone slab;
- placing the natural stone slab on a slab cart;
- moving the slab cart to a storage location.

The natural stone slab is hoisted onto the slab cart using a hoisting device. The slab cart comprises four wheels for moving the slab cart. The slab cart comprises a first support surface and a second support surface for supporting a natural stone slab. The first support surface and the second support surface preferably form an L, wherein a short leg of the L is the first support surface and a long leg of the L is the second support surface. There is an angle between 0° and 30° between the first support surface and a horizontal plane. There is an angle between 60° and 88° between the second support surface and the horizontal plane.

According to a preferred embodiment, the slab cart is placed on a pair of parallel rails at a loading location. The rails are preferably metal rails. The rails extend in a transverse direction. The loading location is preferably a loading station as described in the first aspect.

The method comprises the additional steps of:
- moving the slab cart from the loading location to a transport robot;
- motorized movement of the transport robot over a pair of parallel transport rails to the transport location;
- moving the slab cart from the transport robot to the storage location.

The transport robot comprises a pair of parallel transfer rails. The transfer rails are preferably metal rails. The pair of transfer rails extends in the transverse direction. The pair of transfer rails is suitable for temporarily storing a slab cart during the movement of the slab cart by moving the transport robot in a longitudinal direction, transverse to the transverse direction. The slab cart is movable on the transfer rails.

The transport robot includes a moving means for moving the slab cart from the pair of parallel rails to the pair of transfer rails. The transport device is, for example, a hydraulic or pneumatic cylinder suitable for pulling and pushing a slab cart in the transverse direction. The moving means is, for example, a motor-driven transport chain or conveyor belt with a coupling means suitable for pulling and pushing a slab cart according to the transverse direction. The coupling means is suitable for coupling with a slab cart. The slab cart is moved to the pair of transfer rails from the pair of parallel rails at the loading location using the moving means comprised in the transport robot.

The transport robot comprises a first motor for moving the transport robot on the pair of transport rails. The pair of transport rails extends along the longitudinal direction.

The slab cart is moved from the pair of transfer rails to a pair of parallel storage rails at the storage location using the moving means. The storage rails are preferably metal rails. The pair of storage rails extends in the transverse direction.

This method has the advantage, among other things, that all movements in a storage facility for slab carts with natural stone slabs can be fully automated using a transport robot. There are no forklifts needed in the storage facility itself, which means there is no risk of accidents with these forklifts. During normal operation, there is no need for any persons to enter the storage facility. An additional advantage is that all movements occur on pairs of rails, ensuring that slab carts always remain in the same position and are not tilted. The risk of natural stone slabs falling due to the tilting of slab carts has therefore been eliminated. This method is particularly advantageous because it makes the storage facility sufficiently safe to bring customers to the storage facility. By placing slab carts at the edge of the storage facility, a customer can view patterns in the natural stone slabs and select the natural stone slab for, for example, their kitchen countertop.

According to a preferred embodiment, the method includes the additional step of moving a slab cart from a first storage location in a first aisle bounded by pairs of parallel storage rails, to a second location in a second aisle bounded by pairs of parallel storage rails. The first aisle and the second aisle are parallel. The first aisle and the second aisle extend in the longitudinal direction. The pairs of storage rails that define the first aisle and the second aisle extend in the transverse direction. The slab cart is moved by a first transport robot from the first location to a pair of parallel movement rails. The first transport robot travels on a pair of parallel transport rails along the longitudinal direction in the first aisle. The parallel movement rails are preferably metal rails. The parallel movement rails extend in the transverse direction. The slab cart is moved on the pair of parallel movement rails to the second aisle. The pair of movement rails includes transport means, such as, for example, conveyor belts or transport chains, for moving the slab cart from the first aisle to the second aisle. The slab cart is moved from the pair of parallel movement rails to the second location by a second transport robot. The second transport robot travels on a pair of parallel transport rails in the longitudinal direction in the second aisle.

This embodiment is advantageous if more storage space is required to limit a length of the device.

According to a preferred embodiment, the method comprises the additional step of moving a slab cart from a first storage location to a second storage location with the aid of one or more transport robots on transport rails in the longitudinal direction. The second storage location is a pair of parallel storage rails. The pair of parallel storage rails extends in the transverse direction. The second storage location is a separate fenced off zone. The presence of persons in the zone is detected. The slab cart is not moved to or from the second storage location if the presence of persons in the zone is detected.

This embodiment is advantageous because, for example, customers can view and select natural stone slabs in the zone, without the presence of customers in the zone disrupting the normal operations in the company and without a transport robot posing a danger to the customers.

According to a preferred embodiment, a transport robot reads a barcode while moving over the pair of transport rails. The barcode extends longitudinally along the pairs of storage rails. The barcode is composed of a sequence of individual barcodes. The barcode comprises an encoding of a position in the longitudinal direction. The transport robot reads the barcode to determine a position of the transport robot. The barcode is advantageous because it always allows a sufficiently accurate position of the transport robot to be determined, even if the wheels of the transport robot slip on the pair of transport rails. The barcode is an absolute reference. The barcode requires only a very short processing time on a processor in a control unit of the transport robot, allowing for a smooth and accurate movement of the transport robot.

One skilled in the art will appreciate that a method according to the second aspect is preferably performed using a device according to the first aspect and that a device according to the first aspect is preferably configured for performing a method according to the second aspect. Each feature described in this document, both above and below, can therefore relate to any of the three aspects of the present invention.

In a third aspect, the invention relates to a use of a device according to the first aspect and/or a method according to the second aspect for displaying natural stone slabs for kitchen countertops to customers.

This use results in an improved selection of natural stone slabs for a kitchen countertop. Through the use of the device and/or the method, natural stone countertops can be safely shown to customers, allowing them to select a specific natural stone slab with a desired pattern. As a result, in a finished kitchen countertop, the pattern will not differ from what was chosen.

In what follows, the invention is described by means of non-limiting figures illustrating the invention, and are not intended or to be interpreted as limiting the scope of the invention.

### DESCRIPTION OF THE DRAWINGS

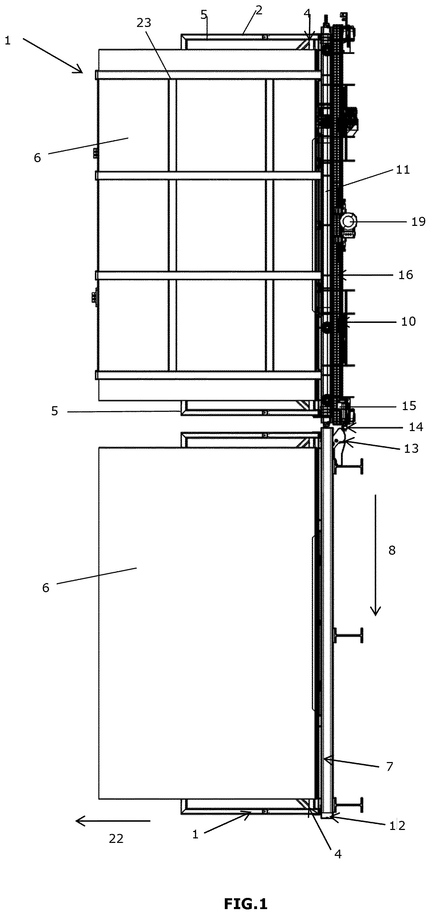

**Figure 1** shows a front view of a device for storing natural stone slabs according to an embodiment of the present invention.

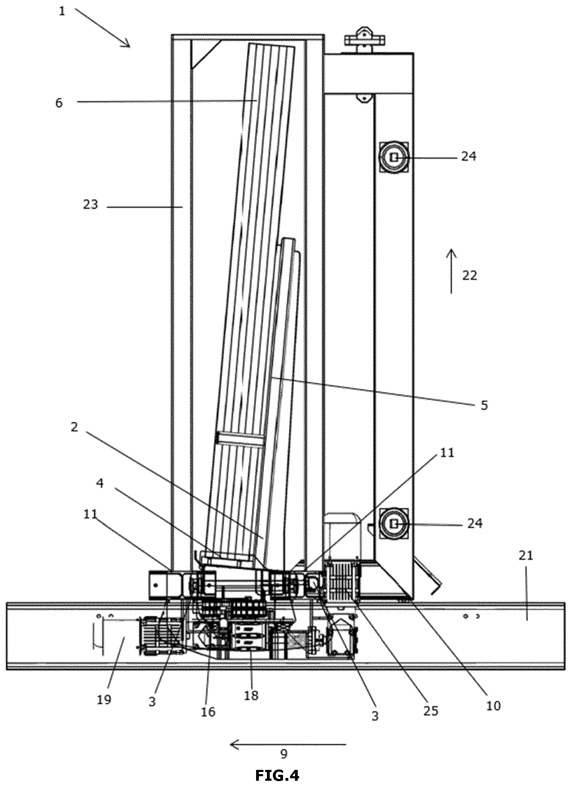

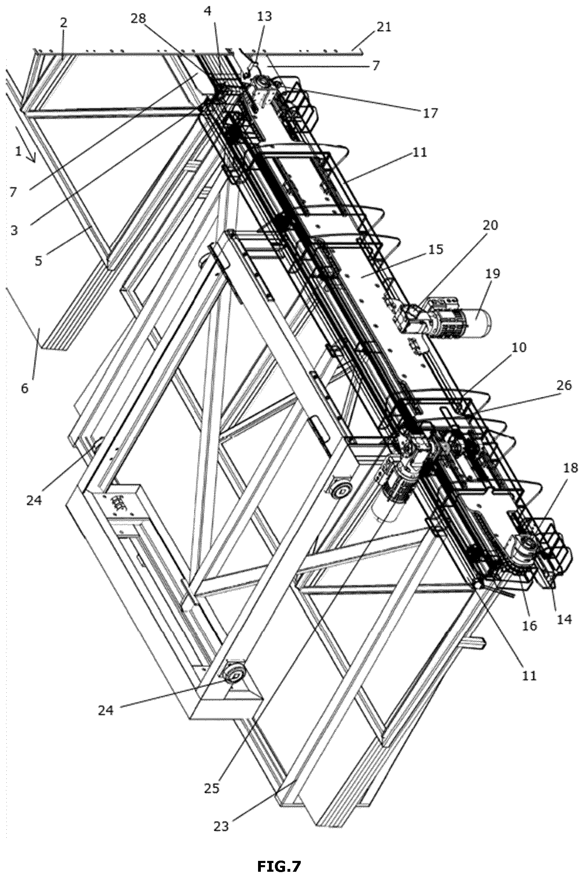

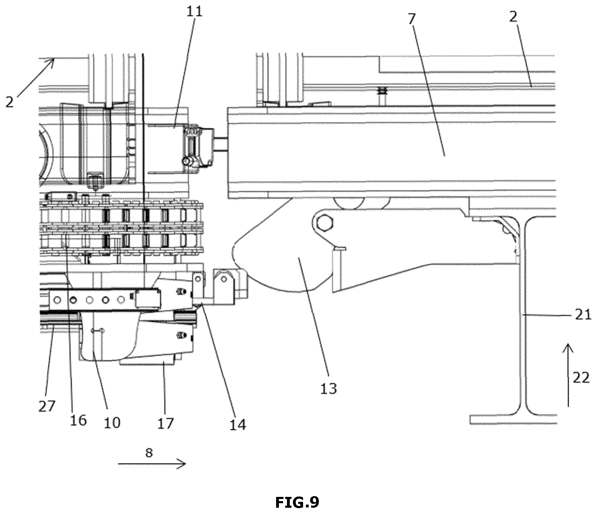

The device (1) comprises multiple slab carts (2) and a transport robot (10). The slab carts (2) comprise four wheels (3) for moving the slab carts (2) and a first support surface (4) and a second support surface (5) for supporting a natural stone slab (6). The wheels (3) are not visible in Figure 1. The device (1) comprises multiple pairs of parallel storage rails (7). The pairs of storage rails (7) extend in a transverse direction (8). The pairs of storage rails (7) are placed next to each other in a lengthwise direction (9) and in a transverse direction (8) at the same distance from the same line in the longitudinal direction (9). For the sake of simplicity, the device (1) in this and subsequent figures is drawn with only a single pair of storage rails (7). The storage rails (7) are I-shaped profiles. This is visible in Figure 7. The wheels (3) of the left slab cart (2) are placed between arms of the I-shaped profiles of the pair of storage rails (7). This means the wheels (3) in Figure 1 are not visible. The slab carts (2) are movable on the pairs of storage rails (7). The pair of storage rails (7) includes a stop (12) at a first end. The stop (12) prevents the left slab cart (2) from rolling at the first end of the pair of storage rails (7). The pair of storage rails (7) comprises at a second opposite end a locking mechanism (13) for closing off the pair of storage rails (7). The locking mechanism (13) locks automatically. The transport robot (10) includes an unlocking mechanism (14) for unlocking the locking mechanism (13). The locking mechanism (13) and the unlocking mechanism (14) are discussed in more detail in Figure 9. The locking mechanism (13) prevents the left slab cart (2) from rolling off the pair of storage rails (7) at the second end in the absence of the transport robot (10). The device (1) comprises a pair of parallel transport rails. For the sake of simplicity, the transport rails are not drawn in this and the following figures. The transport rails extend in the longitudinal direction (9) alongside the pairs of storage rails (7). The transport robot (10) can be moved by motorized means on the transport rails along the pairs of storage rails (7). The transport robot (10) comprises for this purpose a first motor and wheels driven by the first motor. The first motor is an electric motor. The first motor and the wheels of the transport robot (10) are not shown. The transport robot (10) includes a pair of parallel transfer rails (11). The pair of transfer rails (11) extends in the transverse direction (8). The slab carts (2) are movable on the transfer rails (11). The transfer rails (11) are I-shaped profiles. This is visible in Figure 4. The wheels (3) of the right slab cart (2) are placed between arms of the I-shaped profiles of the pair of transfer rails (11). The transport robot (10) comprises a moving means (15) for moving a slab cart (2) between the pair of transfer rails (11) and a pair of storage rails (7). It will be apparent to one skilled in the art that in Figure 1 no slab carts (2) can be moved between the pair of transfer rails (11) and the pair of storage rails (7), since a slab cart (2) is already placed on both pairs. The moving means (15) in this embodiment comprises a transport chain (16) which runs in a loop around second standing shafts in the transverse direction (8).

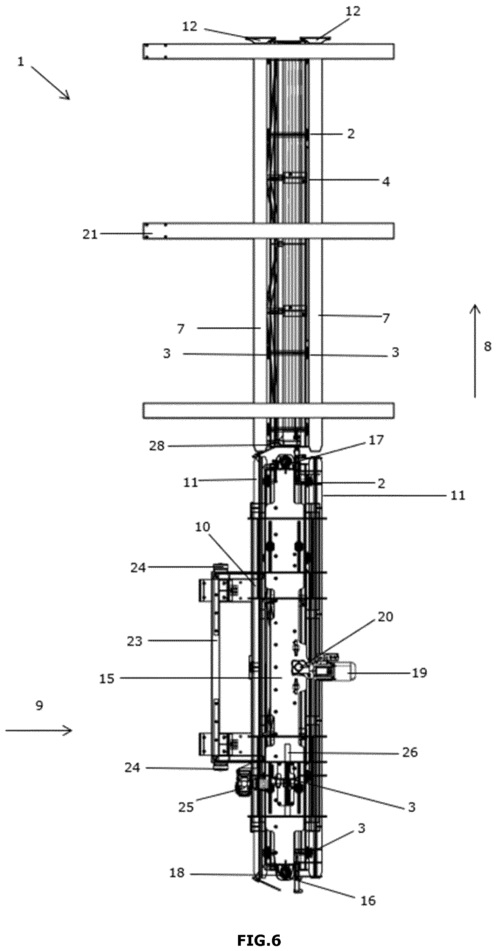

A first standing shaft (17) is located at a first end in the transverse direction (8) of the moving means (15) and a second standing shaft (18) is located at a second opposite end. On the standing shafts (17, 18), sprockets for guiding the transport chain (16) are installed. The sprockets are rotatable. The moving means (15) includes a second motor (19) for moving the transport chain (16) in a loop around the two standing shafts (17, 18). The second motor (19) drives a third standing shaft (20) with a drive wheel. The drive wheel is a gear wheel. The third standing shaft (20) is situated in the transverse direction (8) between the first (17) and the second standing shaft (18). The first (17), second (18), and third standing shaft (20) are not visible in Figure 1. The moving means (15) is discussed in more detail in Figure 6. The moving means (15) is displaceable according to the transverse direction (8). The storage rails (7) are placed on support profiles (21). These support profiles (21) ensure that the moving means (15) can be positioned under the slab carts (2) and between the storage rails (7). The support profiles (21) extend in the longitudinal direction (9). The moving means (15) is movable in a height direction (22), so that slab carts (2) are stackable in multiple layers. The transport robot (10) comprises for this purpose a cage (23) around the slab cart (2) with guide wheels (24) for guiding the cage (23) in a vertical elevator shaft of the transport robot (10). The elevator shaft is not shown in the figures for simplicity.

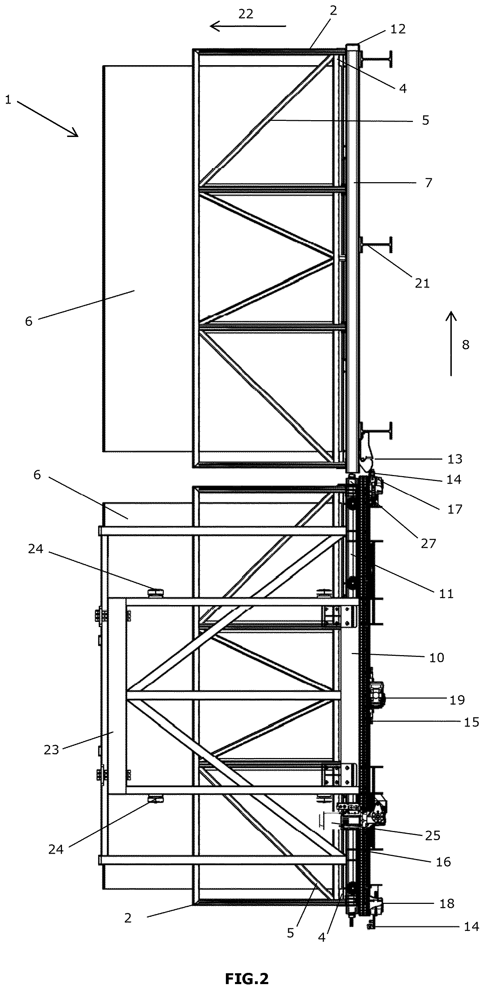

**Figure 2** shows a rear view of the device from Figure 1.

Figure 2 shows how the cage (23) includes four guide wheels (24) for guiding the cage (23) in the not shown vertical elevator shaft of the transport robot (10). The vertical elevator shaft is open at the ends in the transverse direction (8) so that a slab cart (2) is movable between the pair of transfer rails (11) and a pair of storage rails (7). Furthermore, a third motor (25) is also shown. The third motor (25) is an electric motor. The moving means (15) includes a rack (26) at a bottom side. The rack (26) is not visible in Figure 2. The third motor (25) drives a gear wheel that engages in the rack (26). As a result, the moving means (15) is movable in the transverse direction. At both ends of the moving means (15) is the unlocking mechanism (14). The unlocking mechanism (14) comprises a hydraulic piston (27) for unlocking the locking mechanism (13). This is discussed in more detail in Figure 9.

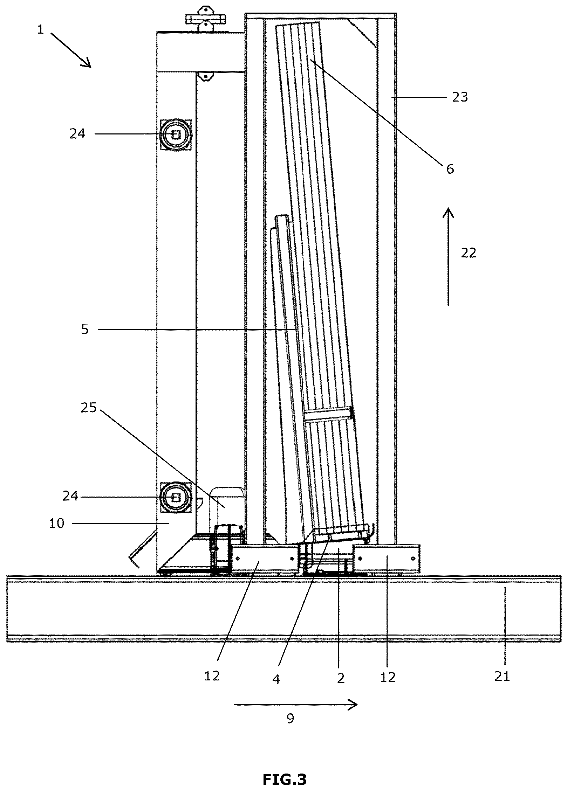

**Figure 3** shows a left side view of the device from Figure 1.

Figure 3 clearly shows how the cage (23) surrounds the slab cart (2) on the transfer rails (11). The guide wheels (24) are also clearly visible. The stops (12) completely close off the storage rails (7) at the end farthest from the transport robot (10), preventing the slab cart (2) on the storage rails (7) from rolling off the storage rails (7). The first support surface (4) and the second support surface (5) of the slab cart (2) form an L. A short leg of the L is the first support surface (4) and a long leg of the L is the second support surface (5). There is an angle of 5° between the first support surface (4) and a horizontal plane. There is an angle of 85° between the second support surface (5) and the horizontal plane. It is clear that multiple natural stone slabs (6) can be stored on a slab cart (2).

**Figure 4** shows a right side view of the device from Figure 1.

In Figure 4, it can be seen that the transfer rails (11) are I-shaped profiles. The wheels (3) of the slab cart (2) on the transfer rails (11) are placed between arms of the I-shaped profiles. The wheels (3) comprise a flange for guiding the wheels (3) along the transfer rails (11). The storage rails (3) of the device (1) are identical to the transfer rails (11). The placement of the wheels (3) of the slab cart (2) on the storage rails (7) is identical to that of the slab cart (2) on the transfer rails (11). Figure 4 also shows bearings in which the second standing shaft (18) is mounted.

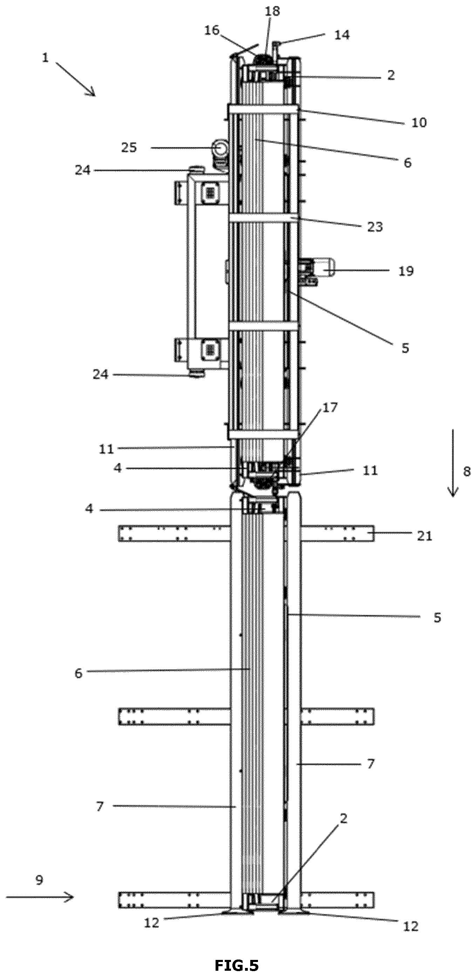

**Figure 5** shows a top view of the device in Figure 1.

The first standing shaft (17) and the second standing shaft (18) at opposite ends of the moving means (15) are clearly visible. On the standing shafts (17, 18), sprockets for guiding the transport chain (16) are installed. It will be apparent to a person skilled in the art that by placing additional storage rails (7) parallel to the depicted storage rails (7), additional pairs of storage rails (7) can be obtained. By aligning a pair of storage rails (7) and the pair of transfer rails (11) in the longitudinal direction (9) and by moving the moving means (15) in the transverse direction (8), it is possible to move a slab cart (2) between the pair of storage rails (7) and the pair of transfer rails (11).

**Figure 6** shows a bottom view of the device from Figure 1.

The flanges of the wheels (3) of the slab cart (2) on the pair of storage rails (7) are visible in Figure 6, while the wheels (3) are placed in the I-shaped profiles of the storage rails (7). Also visible are the first standing shaft (17) and the second standing shaft (18) at ends of the moving means (15), on which sprockets for guiding the transport chain (16) are placed. The second motor (19) for driving the third standing shaft (20) and the third standing shaft (20) are also visible. On the third standing shaft (20), a gear wheel is attached for driving the transport chain (16). The moving means (15) comprises a frame on which the first standing shaft (17), the second standing shaft (18), and the third standing shaft (20) are mounted. The frame includes a rack (26). The rack extends in the transverse direction (8). The rack (26) is coupled to the third motor (25) with a gear wheel. By driving the third motor (25), the moving means (15) is movable in the transverse direction (8). Figure 6 also shows a cavity (28) included in the slab cart (2) for accommodating a standing and protruding pin included in the transport chain (16). At an opposite end of the slab cart (2) is an identical cavity (28). This hole (28) is hidden by the supporting profile (21).

**Figure 7** shows a perspective view of a detail on the bottom of the device from Figure 1.

Figure 7 clearly shows how the third motor (25) and the rack (26) are coupled by means of a gear wheel. The first standing shaft (17) and the second standing shaft (18) are also clearly visible at ends of the moving means (15). The first standing shaft (17) and the second standing shaft (18) are mounted in ball bearings to the frame of the moving means (15). The I-shaped profiles of the storage rails (7) and the transfer rails (11) are also clearly visible.

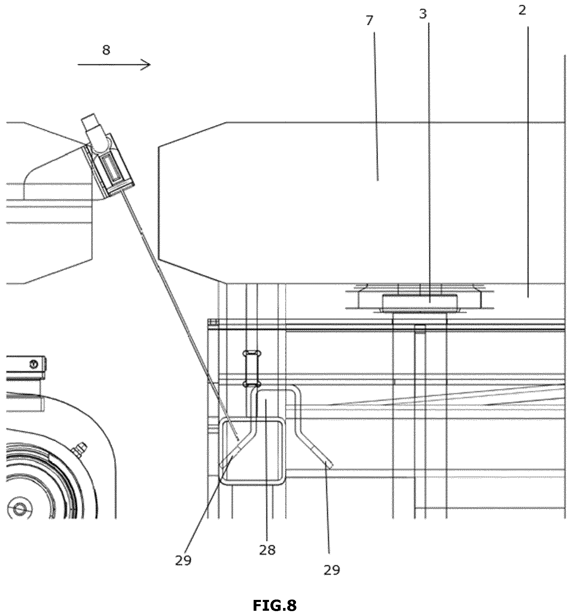

**Figure 8** shows a detail at the bottom of a slab cart of the device from Figure 1.

The detail clearly shows the cavity (28) on the bottom of the slab cart (2). There is an identical cavity (28) at an opposite end of the slab cart (2). The two cavities (28) are located according to the transverse direction (8) on the same line. The two cavities (28) are suitable for simultaneously receiving the two pins included in the transport chain (16). The cavities (28) include guide pieces (29) for guiding the pins in and out of the cavities (28). Openings of the cavities (28) are directed towards the transport chain (16).

**Figure 9** shows a locking mechanism of the device from Figure 1.

The locking mechanism (13) is an unbalanced lever. The lever is oriented according to the transverse direction (8). The lever is heavier at a first end than at a second opposite end. The first end is directed towards the transfer rails (11) and the non-depicted transport rails. The first end is rounded on a bottom side. The locking mechanism (13) is shown in a locked state, wherein the second end is directed upward and prevents a free passage of the slab cart (2). The transport robot (10) includes an unlocking mechanism (14) that is movable by means of a hydraulic piston (27) in the transverse direction (8). By pressing the unlocking mechanism (14) against the rounded bottom of the first end, the first end moves up and consequently the second end moves down, thereby no longer obstructing the passage for the slab cart (2) on the pair of storage rails (7).

The numbered elements in the figures are:
1. Device
2. Slab cart
3. Wheel
4. First support surface
5. Second support surface
6. Natural stone slab
7. Storage rail
8. Transverse direction
9. Longitudinal direction
10. Transport robot
11. Transfer rails
12. Stop
13. Locking mechanism
14. Unlocking mechanism
15. Moving means
16. Transport chain
17. First standing shaft
18. Second standing shaft
19. Second motor
20. Third standing shaft
21. Supporting profile
22. Height direction
23. Cage
24. Guide wheels
25.Third motor
26. Rack
27. Hydraulic piston
28. Cavity
29. Guide piece

## Claims

1. Device for storing natural stone slabs comprising multiple slab carts, wherein a slab cart comprises four wheels for moving the slab cart and a first and a second support surface for supporting a natural stone slab, wherein between the first support surface and a horizontal plane, there is an angle between 0° and 30°, wherein there is an angle between 60° and 88° between the second support surface and the horizontal plane, **characterized in that** the device comprises multiple pairs of parallel storage rails, wherein the pairs of storage rails extend in a transverse direction, wherein the pairs of storage rails are placed next to each other in a longitudinal direction and, according to the transverse direction, at the same distance from the same line according to the longitudinal direction, wherein the slab carts are movable on the pairs of storage rails, wherein the device further comprises a pair of parallel transport rails and a transport robot, wherein the transport rails extend alongside the pairs of storage rails in the longitudinal direction, wherein the transport robot is movable on the transport rails by motorized means, wherein the transport robot comprises a pair of parallel transfer rails, wherein the pair of transfer rails extends in the transverse direction, wherein the slab carts are movable on the transfer rails and wherein the transport robot comprises moving means for moving a slab cart between the pair of transfer rails and a pair of storage rails.

2. The device according to claim 1, **characterized in that** the storage rails and the transfer rails are U-shaped or I-shaped profiles, wherein the wheels of the slab carts are placed between arms of the U-shaped or I-shaped profiles.

3. The device according to claim 1 or 2, **characterized in that** each pair of storage rails comprises a stop at a first end and a locking mechanism at a second opposite end for closing off the pair of storage rails, wherein the second end is directed towards the transport rails, wherein the locking mechanism closes automatically and wherein the transport robot comprises an unlocking means for unlocking the locking mechanism.

4. The device according to claim 3, **characterized in that** the locking mechanism is an unbalanced lever, wherein the lever is oriented in the transverse direction, wherein the lever is heavier at a first end than at a second opposite end, wherein the first end is directed towards the transport rails, wherein the first end is rounded on a bottom side and wherein the transport robot has a pressing element movable in the transverse direction for pressing against the rounded bottom side of the first end of the lever.

5. The device according to any of claims 1-4, **characterized in that** the moving means of the transport robot comprises a transport chain or a conveyor belt, wherein the transport chain or the conveyor belt runs in a loop according to the transverse direction around two standing shafts, wherein the transport chain or the conveyor belt comprises two upright and protruding pins, wherein the slab carts comprise two cavities for simultaneously receiving the two pins, wherein the two cavities are located near two opposite ends of the slab carts and wherein the transport chain or the conveyor belt is movable in the transverse direction.

6. The device according to any of the preceding claims 1-5, **characterized in that** the device includes a barcode that extends along the pairs of storage rails according to the longitudinal direction, wherein the transport robot includes a reader for reading the barcode, wherein the barcode comprises an encoding of a position along the longitudinal direction.

7. The device according to any of the preceding claims 1-6, **characterized in that** the device comprises at least one level, wherein the at least one level is placed above the pairs of storage rails, wherein additional pairs of storage rails are placed on the at least one level, and wherein the moving means is movable in a height direction, transverse to the longitudinal direction and the transverse direction.

8. The device according to any of the preceding claims 1-7, **characterized in that** pairs of storage rails are placed on both sides of the transport robot in the transverse direction.

9. The device according to any of the preceding claims 1-8, **characterized in that** the device comprises multiple transport robots, wherein the pairs of storage rails define parallel adjacent aisles, a pair of parallel movement rails is provided between each two adjacent aisles for moving a slab cart between aisles.

10. The device according to any of the preceding claims 1-9, **characterized in that** a security fence is placed around the device, wherein within the security fence, a zone is delineated using a second security fence, wherein at least one pair of storage rails is placed within the zone and at least one pair of storage rails is placed outside the zone, wherein the device further comprises means for detecting the presence of persons within the zone.

11. Method for storing natural stone slabs, comprising the steps of:
- supplying a natural stone slab;
- placing the natural stone slab on a slab cart at a loading location, wherein the slab cart comprises four wheels for moving the slab cart and a first and a second support surface for supporting the natural stone slab, wherein between the first support surface and a horizontal plane there is an angle between 0° and 30° and wherein between the second support surface and the horizontal plane there is an angle between 60° and 88°;
- moving the slab cart to a storage location;
**characterized in that** the slab cart is placed at the loading location on a pair of parallel rails, wherein the rails extend in a transverse direction, wherein the method comprises the additional steps of:
- moving the slab cart from the loading location to a transport robot, wherein the transport robot comprises a pair of parallel transfer rails, wherein the pair of transfer rails extends in the transverse direction, wherein the slab cart is movable on the transfer rails and wherein the slab cart is moved to the pair of transfer rails with the help of a moving means included in the transport robot;
- motorized moving of the transport robot over a pair of parallel transport rails to the storage location, wherein the pair of transport rails extends in a longitudinal direction;
- moving the slab cart using the moving means from the pair of transfer rails to a pair of parallel storage rails at the storage location, wherein the pair of storage rails extends in the transverse direction.

12. The method according to claim 10, **characterized in that** the method comprises the additional step of moving a slab cart from a first storage location in a first aisle defined by pairs of parallel storage rails to a second location in a second aisle defined by pairs of parallel storage rails, wherein the first aisle and the second aisle are parallel, wherein the first aisle and the second aisle extend in the longitudinal direction, wherein the pairs of storage rails extend in the transverse direction, wherein the slab cart is moved by a first transport robot from the first location to a pair of parallel movement rails, wherein the parallel movement rails extend in the transverse direction, wherein the slab cart is moved on the pair of parallel movement rails to the second aisle and wherein the slab cart is moved by a second transport robot on the pair of parallel movement rails to the second location.

13. The method according to claim 10 or 11, **characterized in that** the method comprises the additional step of moving a slab cart from a first storage location with the aid of one or more transport robots on transport rails in the longitudinal direction to a second storage location, wherein the second storage location is a pair of parallel storage rails, wherein the pair of parallel storage rails extends in the transverse direction, wherein the second storage location is in a separate fenced off zone, wherein presence of persons in the zone is detected and wherein the slab cart is not moved to or from the second storage location if presence of persons in the zone is detected.

14. The method according to claim 10, 11 or 12, **characterized in that** a transport robot reads a barcode extending in the longitudinal direction while moving over the pair of transport rails for determining a position of the transport robot.

15. Use of a device according to any of claims 1-9 and/or a method according to any of claims 10-14 for displaying natural stone slabs for kitchen countertops to customers.
